# EUROPEAN PATENT SPECIFICATION

(11) **EP 4 000 959 B1**
(45) Date of publication and mention of the grant of the patent: **19.07.2023**
(21) Application number: 21206979.3
(22) Date of filing: 08.11.2021
(51) Int. Cl.: B60C 9/00, B60C 9/06, B60C 9/08, B60C 9/20, B60C 11/03, B60C 9/02, B60C 19/00

(54) **TIRE SET AND TRICYCLE**
REIFENSATZ UND DREIRAD
ENSEMBLE DE PNEUS ET TRICYCLE

(30) Priority: 18.11.2020 JP 2020191897
(43) Date of publication of application: 25.05.2022
(73) Proprietor: Sumitomo Rubber Industries, Ltd., Kobe-shi, Hyogo 651-0072 (JP)
(72) Inventor: SATO, Ryota, Kobe-shi, 651-0072 (JP)
(74) Representative: Manitz Finsterwald Patent- und Rechtsanwaltspartnerschaft mbB

(56) References cited:
- EP-A1- 3 187 344
- US-A1- 2019 255 885
- US-A1- 2020 079 155

## Description

### FIELD OF THE INVENTION

The present invention relates to a tire set for tricycles.

### BACKGROUND OF THE INVENTION

In the past, various tires for tricycles have been proposed in which the front and rear wheels are inclined with respect to the road surface as the vehicle body banks during cornering. For example, Patent Document 1 below has proposed a tire that stabilizes the behavior of a motor tricycle by mounting a tire having a specific land ratio to improve the rigidity of the tread section on the one-wheel side.

### PRIOR ART

### [Patent Document]

[Patent Document 1]
Japanese Unexamined Patent Application Publication No. 2018-070109;

US 2020/0079155 A1 discloses a tire set comprising the features according to the preamble of claim 1.

US 2019/0255885 A1 discloses a tire set comprising features according to a related technology.

EP 3 187 344 A1 also discloses a tire set comprising features according to a related technology.

### SUMMARY OF THE INVENTION

### [Problems to be solved by the Invention]

However, the tire in Patent Document 1 only specifies the tire on the one-wheel side without comparing to the two-wheel side, therefore, it was not always possible to propose the best overall balanced tire.

The present invention was made in view of the above, and a primary object thereof is to provide a tire set capable of efficiently improving cornering characteristics of a tricycle and a tricycle on which the tire set is mounted.

### [Means for Solving the Problems]

This object is satisfied by a tire set comprising the features of claim 1 and by a tricycle comprising the features of claim 11. Subclaims are directed to preferable embodiments.

The present invention is a tire set for tricycles having one first wheel and two second wheels, the tire set including one first tire to be mounted on the first wheel, and two second tires to be mounted on the second wheels, wherein each of the second tires has a cornering power of 50% or more and less than 100% of a cornering power of the first tire.

### [Effects of the Invention]

The tire set of the present invention includes one first tire to be mounted on the first wheel (one-wheel side) and two second tires to be mounted on the second wheels (two-wheel side), and a cornering power of each of the second tires is 50% or more and less than 100% of a cornering power of the first tire. With the tire set configured as such, the cornering power of the first wheel and the cornering power of each of the second wheels can be set in a good balance, therefore, the cornering characteristics of the tricycle can be efficiently improved.

### BRIEF DESCRIPTION OF THE DRAWINGS

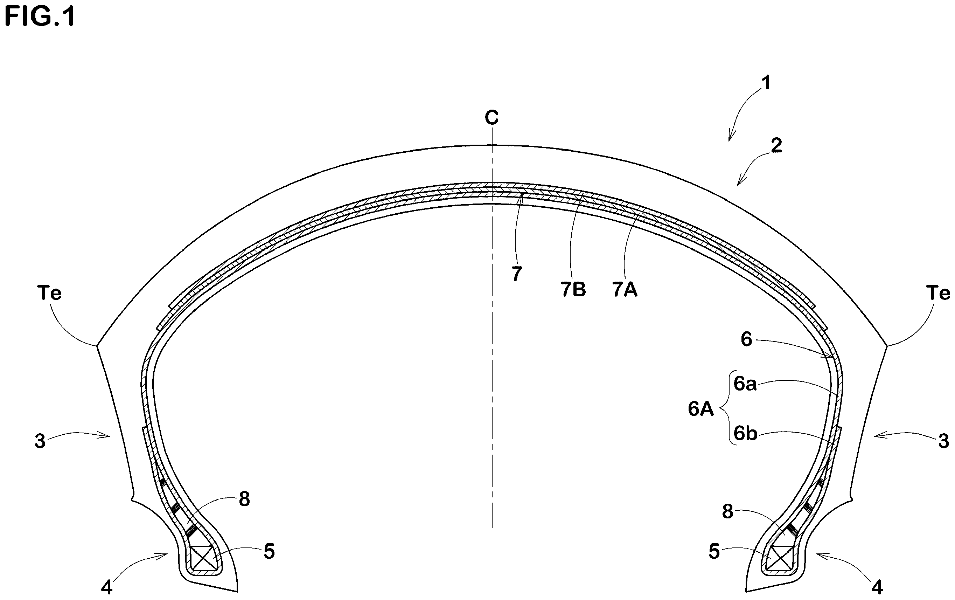

FIG. 1] a cross-sectional view showing an embodiment of a tire.

### DETAILED DESCRIPTION OF THE INVENTION

An embodiment of the present invention will now be described in detail in conjunction with accompanying drawings.

A tire set of the present embodiment is suitable for use on tricycles each having one wheel (first wheel) either on a front-wheel side or a rear-wheel side and two wheels (second wheels) on the other side. The tricycle of the present embodiment has a mechanism in which the front and the rear wheels (the first and the second wheels) incline with respect to the road surface in accordance with the banking of the vehicle body during cornering. The tricycle has two front wheels (second wheels) and one rear wheel (first wheel), for example. The tricycle configured as such has a good balance between the cornering characteristics and small-turn capability.

The tire set for tricycles of the present embodiment includes one first tire to be mounted on the one-wheel side and two second tires to be mounted on the two-wheel side. It is preferred that a cornering power Cp2 of each of the second tires is 50% or more and less than 100% of a cornering power Cp1 of the first tire. With the tire set configured as such, the cornering power Cp1 on the one-wheel side and the cornering power Cp2 on the two-wheel side can be set in a good balance, therefore, the cornering characteristics of the tricycle can be efficiently improved.

Since the cornering power Cp2 of each of the second tires is 50% or more of the cornering power Cp1 of the first tire, it is possible that excessive shortage of the cornering power Cp2 on the two-wheel side is suppressed. From such a point of view, the cornering power Cp2 of each of the second tires is preferably 60% or more and more preferably 70% or more of the cornering power Cp1 of the first tire.

Since the cornering power Cp2 of each of the second tires is less than 100%, it is possible that the cornering power Cp2 on the two-wheel side is suppressed from becoming excessive. From such a point of view, the cornering power Cp2 of each of the second tires is preferably 90% or less and more preferably 80% or less of the cornering power Cp1 of the first tire.

As a more preferred embodiment, the first tire and the second tires may have the same structure or different structures from each other. For the first tire and the second tires (hereinafter, may be collectively referred to as "tire 1"), a well-known structure can be employed as appropriate, for example. An embodiment of the tire 1 is described below.

Figure 1 is a tire meridian section showing the tire 1 of the present embodiment in a standard state. Here, the "standard state" is a state in which the tire 1 is mounted on a standard rim, inflated to a standard inner pressure, and loaded with no tire load. In the present specification, the dimensions of various parts of the tire 1 are the values measured in the standard state unless otherwise noted.

The "standard rim" is a wheel rim specified for the concerned tire by a standard included in a standardization system on which the tire is based, for example, the "normal wheel rim" in JATMA, "Design Rim" in TRA, and "Measuring Rim" in ETRTO. The "standard rim" is a rim defined for each tire by the manufacturer and the like in the absence of a standardization system including a standard on which the tire 1 is based.

The "standard inner pressure" is air pressure specified for the concerned tire by a standard included in a standardization system on which the tire is based, for example, the maximum air pressure in JATMA, maximum value listed in the "TIRE LOAD LIMITS AT VARIOUS COLD INFLATION PRESSURES" table in TRA, and "INFLATION PRESSURE" in ETRTO. The "standard inner pressure" is air pressure defined for each tire by the manufacturer and the like in the absence of a standardization system including a standard on which the tire 1 is based.

As shown in FIG. 1, the tire 1 of the present embodiment includes a tread portion 2, a pair of sidewall portions 3, and a pair of bead portions 4. The tread portion 2 is the part which is to come into contact with the ground during rotation of the tire, for example. Both ends in a tire axial direction of the tread portion 2 are tread edges Te. The center position in the tire axial direction between the two tread edges Te is a tire equator (C).

In the tire meridian section, it is preferred that the tread portion 2 has an arc-shaped profile that is convex outward in a tire radial direction so that sufficient ground contacting area can be obtained even during cornering when a camber angle is large. The tread portion 2 configured as such is suitable for generating necessary camber thrust during cornering.

The tread portion includes a land region to be in contact with the road surface and a groove portion to drainage, for example. For each tire 1, the tread portion 2 has a land ratio Ld which is a ratio of the area of only the land region of the tread portion 2 divided by the total area including the land region and the groove portion.

Each of the second tires in the present embodiment has a land ratio Ld2 smaller than a land ratio Ld1 of the first tire. The second tires configured as such can decrease rigidity more than the first tire, which helps to make the cornering power Cp2 of each of the second tires smaller than the cornering power Cp1 of the first tire.

It is preferred that the land ratio Ld2 of each of the second tires is 80% or more of the land ratio Ld1 of the first tire. Since the land ratio Ld2 of each of the second tires is 80% or more of the land ratio Ld1 of the first tire, the rigidity of the second tires can be suppressed from being excessively insufficient. From such a point of view, the land ratio Ld2 of each of the second tires is more preferably 83% or more, and even more preferably 85% or more of the land ratio Ld1 of the first tire.

It is preferred that the land ratio Ld2 of each of the second tires is 95% or less of the land ratio Ld1 of the first tire. Since the land ratio Ld2 of each of the second tires is 95% or less of the land ratio Ld1 of the first tire, the rigidity of the second tires can be decreased, therefore, the cornering power Cp2 of each of the second tires can be made smaller than the cornering power Cp1 of the first tire. From such a point of view, the land ratio Ld2 of each of the second tires is more preferably 92% or less, even more preferably 90% or less of the land ratio Ld1 of the first tire.

The sidewall portions 3 are the portions located on both sides in the tire axial direction of the tread portion 2 and located radially inside the tread portion 2, for example. The bead portions 4 are the portions each located radially inside a respective one of the sidewall portions 3, for example. It is preferred that each of the bead portions 4 has a bead core 5 embedded therein.

The tire 1 of the present embodiment is provided with a carcass 6 extending between a pair of the bead portions 4, and a tread reinforcing layer 7 arranged radially outside the carcass 6 and inside the tread portion 2.

The carcass 6 is composed of at least one, one in the present embodiment, carcass ply 6A. The carcass ply 6A includes a main body portion (6a) extending between the bead cores 5 via the tread portion 2 and the sidewall portions 3, and turned up portions (6b) connected with the main body portion (6a) and each turned up around a respective one of the bead cores 5.

It is preferred that a bead apex rubber 8 is provided between the main body portion (6a) and each of the turned up portions (6b). The bead apex rubber 8 is made of hard rubber, for example. Thereby, the bead portions 4 are effectively reinforced.

The carcass 6 of the first tire is composed of one to three carcass plies 6A, for example. The first tire configured as such increase the rigidity on the one-wheel side, therefore, the cornering power Cp1 on the one-wheel side can be increased, which helps to improve the cornering characteristics of the tricycle.

It is preferred that the carcass 6 of each of the second tires is composed of not more than two carcass plies 6A. The carcass 6 of each of the second tires of the present embodiment is composed of one carcass ply 6A. In the second tires configured as such, the rigidity can be decreased more than the first tire, which helps to make the cornering power Cp2 of each of the second tires smaller than the cornering power Cp1 of the first tire. Further, the second tires configured as such can decrease the weight on the two-wheel side, which helps to improve the cornering characteristics of the tricycle.

It is preferred that the carcass ply 6A has carcass cords arranged at an angle with respect to the tire equator (C). For the carcass cords, organic fiber cords and the like such as nylon, polyester, or rayon and the like are suitably employed, for example.

The carcass ply 6A of each of the second tires has the carcass cords arranged at an angle, preferably of 70 degrees or more, with respect to the tire equator (C). Since the angle of the carcass cords is 70 degrees or more, the cornering power Cp2 of each of the second tires can be decreased, therefore, the cornering characteristics and high-speed stability of the tricycle can be improved. From such a point of view, the angle of the carcass cords of the second tires is more preferably 80 degrees or more and even more preferably 90 degrees or more.

The tread reinforcing layer 7 is composed of at least one, two in the present embodiment, reinforcing plies 7A and 7B. Each of the reinforcing plies 7A and 7B has a plurality of reinforcing cords arranged at an angle of 5 degrees or more and 40 degrees or less with respect to the tire equator (C), for example. It is preferred that the tread reinforcing layer 7 is configured such that the reinforcing plies 7A and 7B are overlapped so that the reinforcing cords of the reinforcing ply 7A intersect with the reinforcing cords of the reinforcing ply 7B. For the reinforcing cords, steel cords, aramid, or rayon and the like are suitably employed, for example.

It is preferred that the tread reinforcing layer 7 of each of the second tires has a second strength St2 smaller than a first strength St1 of the tread reinforcing layer 7 of the first tire. The tread reinforcing layer 7 configured as such helps to make the cornering power Cp2 of each of the second tires smaller than the cornering power Cp1 of the first tire.

Here, the first strength St1 is expressed as the product of the number of the reinforcing cords per 5 cm of ply width of the tread reinforcing layer 7 of the first tire and a rupture strength of the reinforcing cords. When the first tire has two reinforcing plies 7A and 7B, the number of the reinforcing cords per 5 cm of ply width of the tread reinforcing layer 7 of the first tire is the average of the number of the reinforcing cords per 5 cm of ply width of each of the reinforcing plies 7A and 7B. It should be noted that in the present specification, the number of the reinforcing cords per 5 cm of ply width of each of the reinforcing plies 7A and 7B is the number of the reinforcing cords per 5 cm of ply width in the direction perpendicular to a longitudinal direction of the reinforcing cords of each of the reinforcing plies 7A and 7B.

Further, the second strength St2 is expressed as the product of the number of the reinforcing cords per 5 cm of ply width of the tread reinforcing layer 7 of the second tire and the rupture strength of the reinforcing cords. When the second tire has two reinforcing plies 7A and 7B, the number of the reinforcing cords per 5 cm ply width of the tread reinforcing layer 7 of the second tire is the average of the number of the reinforcing cords per 5 cm ply width of each of the reinforcing plies 7A and 7B.

It is referred that the second strength St2 is 70% or more of the first strength St1. Since the second strength St2 is 70% or more of the first strength St1, the cornering power Cp2 on the two-wheel side is suppressed from excessively decreasing, therefore, the cornering characteristics of the tricycle can be improved. From such a point of view, the second strength St2 is more preferably 72% or more and even more preferably 75% or more of the first strength St1.

It is preferred that the second strength St2 is 90% or less of the first strength St1. Since the second strength St2 is 90% or less of the first strength St1, the cornering power Cp2 on the two-wheel side is suppressed from becoming excessive, therefore, the cornering characteristics of the tricycle can be improved. From such a point of view, the second strength St2 is more preferably 88% or less and even more preferably 85% or less of the first strength St1.

The tire 1 of the present embodiment may be either a radial tire or a bias tire. It is preferred that the second tires are radial tires. It is more preferred that the first tire is also a radial tire. The tire 1 configured as such is excellent in the high-speed stability.

While detailed description has been made of an especially preferred embodiment of the present invention, the present invention can be embodied in various forms within the scope of the appended claims.

### [Examples]

Tire sets of the first and the second tires having the basic structure shown in FIG. 1 were made by way of test according to the specifications listed in Table 1. These test tires were mounted on all wheels of a test vehicle and tested for the cornering characteristics and the high-speed stability. The common specifications and the test methods for each test tire were as follows.

### < Common Specifications >

Test vehicle: motor tricycle with two front wheels and one rear wheel
Front wheel tire size: 120/70ZR15
Rear wheel tire size: 190/55ZR17

### < Cornering Characteristics >

While a test rider drove a test vehicle with the test tires mounted thereon, the stability during cornering was evaluated by the test rider's feeling. The results are indicated by using a 5-point scale, wherein a larger numerical value shows better cornering characteristics.

### < High-speed Stability >

While the test rider drove the test vehicle with the test tires mounted thereon, the stability during high-speed running was evaluated by the test driver's feeling. The results are indicated by using a 5-point scale, wherein a larger numerical value shows better high-speed stability.

The test results are shown in Table 1.

**Table 1**

| | | Ref.1 | Ref.2 | Ref.3 | Ex.1 | Ex.2 | Ex.3 | Ex.4 | Ex.5 | Ex.6 | Ex.7 | Ex.8 | Ex.9 | Ex. 10 | Ex.11 |
|---|---|---|---|---|---|---|---|---|---|---|---|---|---|---|---|
| Cornering power Cp2 of Second tire/ | | 100 | 100 | 105 | 80 | 60 | 95 | 80 | 80 | 80 | 80 | 80 | 80 | 80 | 80 |
| Cornering power Cp1 of First tire | [%] | | | | | | | | | | | | | | |
| Land ratio Ld2 of Second tire/ | | 100 | 105 | 100 | 90 | 90 | 90 | 80 | 95 | 100 | 90 | 90 | 90 | 90 | 95 |
| Land ratio Ld1 of First tire | [%] | | | | | | | | | | | | | | |
| Second strength St2/ | | 100 | 100 | 100 | 80 | 80 | 80 | 80 | 80 | 80 | 70 | 90 | 100 | 80 | 80 |
| First strength St1 | [%] | | | | | | | | | | | | | | |
| Number of Carcass ply | | 2 | 2 | 2 | 2 | 2 | 2 | 2 | 2 | 2 | 2 | 2 | 2 | 1 | 2 |
| Angle of Carcass cord | [degree] | 70 | 70 | 70 | 70 | 70 | 70 | 70 | 70 | 70 | 70 | 70 | 70 | 70 | 90 |
| Cornering characteristics | | 3.0 | 2.0 | 1.5 | 5.0 | 4.0 | 4.5 | 4.0 | 4.0 | 3.5 | 4.5 | 4.5 | 4.0 | 5.0 | 4.5 |
| | [5-point scale] | | | | | | | | | | | | | | |
| High-speed stability | [5-point scale] | 3.0 | 2.0 | 1.5 | 4.5 | 4.0 | 4.5 | 4.0 | 3.5 | 3.5 | 4.0 | 4.5 | 4.0 | 5.0 | 5.0 |

From the test results, it was confirmed that the tire sets in Examples had superior cornering characteristics and equal or better high-speed stability compared with References.

### [Description of Reference Signs]

- Cp1: cornering power
- Cp2: cornering power

## Claims

1. A tire set for a tricycle having one first wheel and two second wheels, the tire set comprising:
one first tire (1) to be mounted on the first wheel; and
two second tires (1) to be mounted on the second wheels,
**characterized in that**
each of the second tires (1) has a cornering power Cp2 of 50% or more and less than 100% of a cornering power Cp1 of the first tire.

2. The tire set according to claim 1, wherein the cornering power Cp2 of each of the second tires (1) is 60% or more and 90% or less of the cornering power Cp1 of the first tire (1).

3. The tire set according to claim 1 or 2, wherein each of the second tires (1) has a land ratio smaller than the land ratio of the first tire (1).

4. The tire set according to claim 3, wherein the land ratio of each of the second tires (1) is 80% or more and 95% or less of the land ratio of the first tire (1).

5. The tire set according to any one of claims 1 to 4, wherein
each of the first tire (1) and the second tires (1) has a tread portion (2) and a tread reinforcing layer (7) arranged inside the tread portion (2),
the tread reinforcing layer (7) has a plurality of reinforcing cords arranged therein,
the tread reinforcing layer (7) of each of the second tires (1) has a second strength smaller than a first strength of the tread reinforcing layer (7) of the first tire (1),
the first strength is expressed as a product of a rupture strength of the reinforcing cords and the number of the reinforcing cords per 5 cm of ply width of the tread reinforcing layer (7) of the first tire (1), and
the second strength is expressed as a product of a rupture strength of the reinforcing cords and the number of the reinforcing cords per 5 cm of ply width of the tread reinforcing layer (7) of the second tire (1).

6. The tire set according to claim 5, wherein the second strength is 70% or more and 90% or less of the first strength.

7. The tire set according to any one of claims 1 to 6, wherein
each of the second tires (1) has a carcass (6) extending between a pair of bead portions (4), and
the carcass (6) is formed by one carcass ply (6A) or two carcass plies (6A).

8. The tire set according to claim 7, wherein the carcass (6) is formed by one carcass ply (6A).

9. The tire set according to claim 7 or 8, wherein the or each carcass ply (6A) has carcass cords arranged at an angle of 70 degrees or more with respect to a tire equator (C).

10. The tire set according to any one of claims 1 to 9, wherein the second tires (1) are radial tires.

11. A tricycle comprising:
the second wheels on a front-wheel side;
the first wheel on a rear-wheel side;
a mechanism in which the first and the second wheels incline with respect to a road surface in accordance with banking of a vehicle body during cornering; and
the tire set according to any one of claims 1 to 10 mounted on the wheels thereof.

## Patentansprüche

1. Reifensatz für ein Dreirad mit einem ersten Rad und zwei zweiten Rädern, wobei der Reifensatz umfasst:
einen ersten Reifen (1), der an dem ersten Rad zu montieren ist; und
zwei zweite Reifen (1), die an den zweiten Rädern zu montieren sind,
**dadurch gekennzeichnet, dass**
jeder der zweiten Reifen (1) eine Seitenführungskraft Cp2 von 50% oder mehr und von weniger als 100% einer Seitenführungskraft Cp1 des ersten Reifens aufweist.

2. Reifensatz nach Anspruch 1, wobei die Seitenführungskraft Cp2 jedes der zweiten Reifen (1) 60% oder mehr und 90% oder weniger der Seitenführungskraft Cp1 des ersten Reifens (1) beträgt.

3. Reifensatz nach Anspruch 1 oder 2, wobei jeder der zweiten Reifen (1) einen Landanteil aufweist, der kleiner als der Landanteil des ersten Reifens (1) ist.

4. Reifensatz nach Anspruch 3, wobei der Landanteil jedes der zweiten Reifen (1) 80% oder mehr und 95% oder weniger des Landanteils des ersten Reifens (1) beträgt.

5. Reifensatz nach einem der Ansprüche 1 bis 4, wobei
jeder der ersten Reifen (1) und der zweiten Reifen (1) einen Laufflächenabschnitt (2) und eine Laufflächen-Verstärkungsschicht (7) aufweist, die innerhalb des Laufflächenabschnitts (2) angeordnet ist,
die Laufflächen-Verstärkungsschicht (7) mehrere Verstärkungskorde aufweist, die darin angeordnet sind,
die Laufflächen-Verstärkungsschicht (7) jedes der zweiten Reifen (1) eine zweite Festigkeit aufweist, die kleiner als eine erste Festigkeit der Laufflächen-Verstärkungsschicht (7) des ersten Reifens (1) ist,
die erste Festigkeit als ein Produkt einer Bruchfestigkeit der Verstärkungskorde und der Anzahl der Verstärkungskorde pro 5 cm einer Lagenbreite der Laufflächen-Verstärkungsschicht (7) des ersten Reifens (1) ausgedrückt wird und
die zweite Festigkeit als ein Produkt einer Bruchfestigkeit der Verstärkungskorde und der Anzahl der Verstärkungskorde pro 5 cm einer Lagenbreite der Laufflächen-Verstärkungsschicht (7) des zweiten Reifens (1) ausgedrückt wird.

6. Reifensatz nach Anspruch 5, wobei die zweite Festigkeit 70% oder mehr und 90% oder weniger der ersten Festigkeit beträgt.

7. Reifensatz nach einem der Ansprüche 1 bis 6, wobei
jeder der zweiten Reifen (1) eine Karkasse (6) aufweist, die sich zwischen einem Paar von Wulstabschnitten (4) erstreckt, und
die Karkasse (6) durch eine Karkassenlage (6A) oder durch zwei Karkassenlagen (6A) gebildet ist.

8. Reifensatz nach Anspruch 7, wobei die Karkasse (6) durch eine Karkassenlage (6A) gebildet ist.

9. Reifensatz nach Anspruch 7 oder 8, wobei die oder jede Karkassenlage (6A) Karkassenkorde aufweist, die unter einem Winkel von 70 Grad oder mehr bezogen auf einen Reifenäquator (C) angeordnet sind.

10. Reifensatz nach einem der Ansprüche 1 bis 9, wobei die zweiten Reifen (1) Radialreifen sind.

11. Dreirad, umfassend:
die zweiten Räder auf einer Vorderradseite;
das erste Rad auf einer Hinterradseite;
einen Mechanismus, in welchem sich das erste Rad und die zweiten Räder bezogen auf eine Straßenoberfläche in Einklang mit einer Querneigung einer Fahrzeugkarosserie während einer Kurvenfahrt neigen; und
den Reifensatz nach einem der Ansprüche 1 bis 10, der an dessen Rädern montiert ist.

## Revendications

1. Ensemble de pneumatiques pour un tricycle ayant une première roue et deux secondes roues, l'ensemble de pneumatiques comprenant :
un premier pneumatique (1) devant être monté sur la première roue ; et
deux seconds pneumatiques (1) devant être montés sur les secondes roues,
**caractérisé en ce que**
chacun des seconds pneumatiques (1) a une puissance en virage Cp2 de 50 % ou plus et de moins de 100 % d'une puissance en virage Cp1 du premier pneumatique.

2. Ensemble de pneumatiques selon la revendication 1, dans lequel la puissance en virage Cp2 de chacun des seconds pneumatiques (1) est de 60 % ou plus et de 90 % ou moins de la puissance en virage Cp1 du premier pneumatique (1).

3. Ensemble de pneumatiques selon la revendication 1 ou 2, dans lequel chacun des seconds pneumatiques (1) a un rapport de relief plus petit que le rapport de relief du premier pneumatique (1).

4. Ensemble de pneumatiques selon la revendication 3, dans lequel le rapport de relief de chacun des seconds pneumatiques (1) est de 80 % ou plus et de 95 % ou moins du rapport en relief du premier pneumatique (1).

5. Ensemble de pneumatiques selon l'une quelconque des revendications 1 à 4, dans lequel
chacun du premier pneumatique (1) et des seconds pneumatiques (1) a une portion formant bande de roulement (2) et une couche de renforcement de bande de roulement (7) agencée à l'intérieur de la portion formant bande de roulement (2),
la couche de renforcement de bande de roulement (7) a une pluralité de câblés de renforcement agencés à l'intérieur de celle-ci ;
la couche de renforcement de bande de roulement (7) de chacun des seconds pneumatiques (1) a une seconde résistance plus petite qu'une première résistance de la couche de renforcement de bande de roulement (7) du premier pneumatique (1),
la première résistance est exprimée sous la forme d'un produit d'une résistance à la rupture des câblés de renforcement et du nombre de câblés de renforcement pour 5 cm de largeur de nappe de la couche de renforcement de bande de roulement (7) du premier pneumatique (1), et
la seconde résistance est exprimée sous la forme d'un produit de la résistance à la rupture des câblés de renforcement et du nombre de câblés de renforcement pour 5 cm de largeur de nappe de la couche de renforcement de bande de roulement (7) du second pneumatique (1).

6. Ensemble de pneumatiques selon la revendication 5, dans lequel la seconde résistance est de 70 % ou plus et de 90 % ou moins de la première résistance.

7. Ensemble de pneumatiques selon l'une quelconque des revendications 1 à 6, dans lequel
chacun des seconds pneumatiques (1) a une carcasse (6) s'étendant entre une paire de portions de talon (4), et
la carcasse (6) est formée par une nappe de carcasse (6A) ou par deux nappes de carcasse (6A).

8. Ensemble de pneumatiques selon la revendication 7, dans lequel la carcasse (6) est formée par une nappe de carcasse (6A).

9. Ensemble de pneumatiques selon la revendication 7 ou 8, dans lequel ladite une ou chaque nappe de carcasse (6A) a des câblés de carcasse agencés sous un angle de 70 degrés ou plus par rapport à un équateur de pneumatique (C).

10. Ensemble de pneumatiques selon l'une quelconque des revendications 1 à 9, dans lequel les seconds pneumatiques (1) sont des pneumatiques radiaux.

11. Tricycle comprenant :
les secondes roues sur un côté de roues avant ;
la première roue ou sur un côté de roues arrière ;
un mécanisme dans lequel la première et les secondes roues s'inclinent par rapport à une surface routière en accord avec l'inclinaison d'une carrosserie de véhicule pendant un virage ; et
l'ensemble de pneumatiques selon l'une quelconque des revendications 1 à 10 montés sur les roues de celui-ci.
